# EUROPEAN PATENT SPECIFICATION

(11) **EP 2 634 375 B1**
(45) Date of publication and mention of the grant of the patent: **23.10.2019**
(21) Application number: 13157045.9
(22) Date of filing: 27.02.2013
(51) Int. Cl.: F01D 11/00, F01D 11/02, F01D 5/30

(54) **Method of producing a seal between stationary and rotating components of a turbine engine**
Herstellungsverfahren einer Dichtung zwischen stationären und rotierenden Komponeneten eines Turbinenmotors
Procédé de fabrication d'un joint entre composants statiques et rotoriques pour un moteur à turbine

(30) Priority: 28.02.2012 US 201213407099
(43) Date of publication of application: 04.09.2013
(73) Proprietor: General Electric Company, Schenectady, NY 12345 (US)
(72) Inventor: Piersall, Matthew Robert, Greenville, South Carolina 29615 (US); Kareff, Spencer Aaron, Greenville, South Carolina 29615 (US)
(74) Representative: BRP Renaud & Partner mbB Rechtsanwälte Patentanwälte Steuerberater

(56) References cited:
- US-A1- 2007 098 545
- US-A1- 2008 124 215
- US-A1- 2008 263 863
- US-B1- 6 189 891

## Description

### BACKGROUND OF THE INVENTION

The present invention relates generally to rotary machines and, more particularly, to a method of producing a seal between a stationary component and a rotating component of a turbine engine.

Rotor assemblies used with turbine engines include a row of circumferentially-spaced rotor blades. Each rotor blade, sometimes referred to as a "bucket" includes an airfoil that includes a pressure side and a suction side that are connected together along leading and trailing edges. Each bucket extends radially outward from a bucket platform. Each bucket typically includes a dovetail that extends radially inward from a shank extending between the platform and the dovetail. The dovetail is used to couple the rotor blade to a rotor disk or spool.

Wheel space cavities, defined between the rotating parts, such as the buckets, and the stationary parts of gas turbines, may be purged with cooling air to maintain the temperature of the wheel space and rotor within a desired temperature range, and to prevent hot gas path ingestion into the cavities. Seals are provided to seal the wheel space cavity. At least some known rotor blades include "angel wing seals" that extend generally axially away from the blades to form a seal by overlapping with nozzle seal lands extending from fixed components in the gas turbine. Typically, angel wing seals are cast integrally with the blade and are generally substantially planar, in cross-section, or include a preformed 90° bend at the tip that enables a portion of the angel wing to extend substantially perpendicular to the turbine engine centerline. Thus, if the angel wing seals need to be adjusted, for example to change a gap size with respect to an adjacent engine component, the gap size may be changed with respect to one direction only (i.e., axial or radial) by grinding down the angel wing seal.

Document US 2007/0098545 A1 discloses a cast turbine blade with an angel wing seal having sealing tips angled at angle of 22.5°-68° relative to the longitudinal axis of the turbine. Document US2008/0263863 A1 discloses an exemplary method of restoring knife edge sealing tips of angel wing seals.

### BRIEF DESCRIPTION OF THE INVENTION

The invention resides in a method of producing a seal between a stationary component and a rotating component of a turbine engine, as set forth in claim 1.

### BRIEF DESCRIPTION OF THE DRAWINGS

Embodiments of the present invention will now be described, by way of example only, with reference to the accompanying drawings in which:
Fig. 1 shows a cross section of an exemplary gas turbine.
Fig. 2 shows an enlarged perspective view of an exemplary turbine blade that may be used with the gas turbine shown in Fig. 1.
Fig. 3 shows a cross section of the turbine blade shown in Fig. 2 and taken along line 3-3.

### DETAILED DESCRIPTION OF THE INVENTION

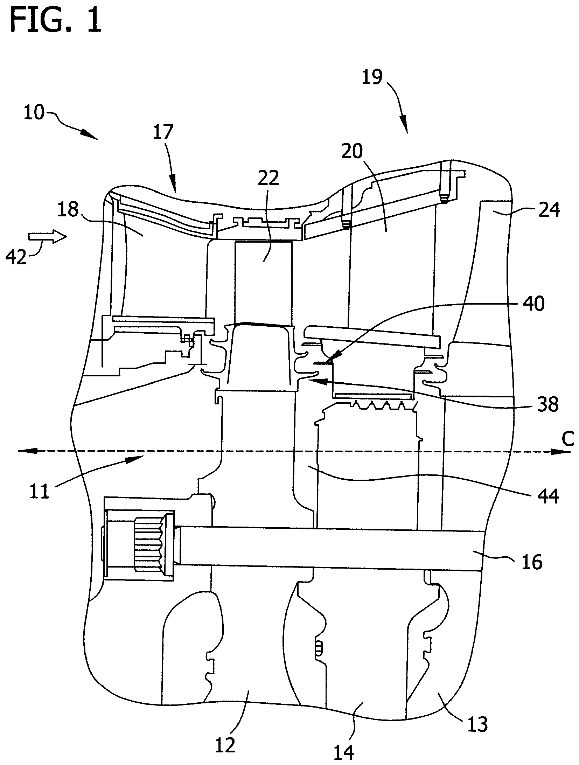

Fig. 1 shows illustrates a portion of an exemplary gas turbine 10 that includes a rotor 11 having axially-spaced rotor wheels 12, 13 and spacers 14 joined by a plurality of circumferentially spaced, axially extending fasteners 16. In one example, turbine 10 includes a plurality of stages 17, 19 having first-stage nozzles 18 and second-stage nozzles 20. In one example, a plurality of rotor blades 22, 24, for example, first-stage rotor blades 22 and second-stage rotor blades 24 are circumferentially spaced about rotor wheels 12, 13 between first-stage nozzles 18 and second-stage nozzles 20. First-stage rotor blades 22 and second-stage rotor blades 24 are rotatable with the rotor wheels 12, 13.

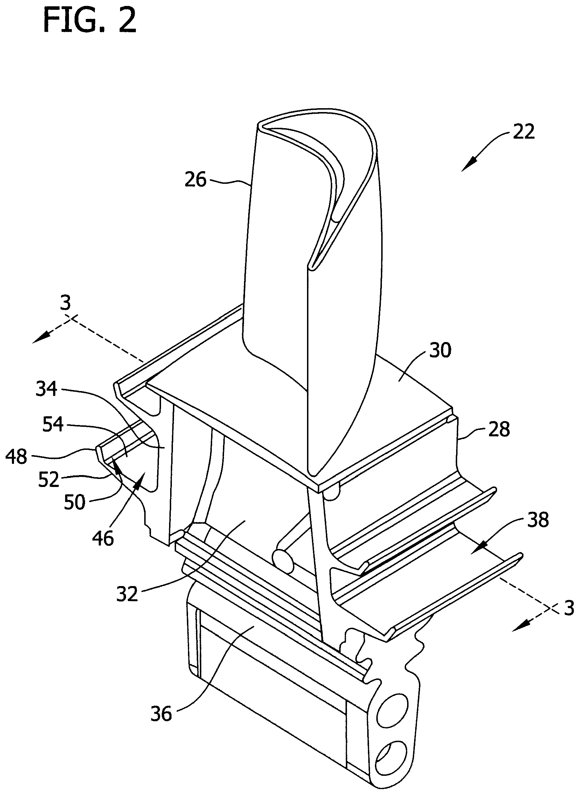

Fig. 2 illustrates an exemplary first-stage rotor blade 22 used with turbine 10. In the exemplary embodiment, rotor blade 22 includes an airfoil 26 extending from a shank 28. Shank 28 includes a platform 30 and a shank pocket 32 having cover plates 34. A dovetail 36 extends partially from shank 28 to enable airfoil 26 to couple with rotor wheel 12 (shown in Fig. 1). In the exemplary embodiment angel wing seals 38 extend outward from rotor blade 22. Angel wing seals 38 are configured to overlap with lands 40 (shown in Fig. 1) formed on an adjacent nozzle to form a seal. In one embodiment, the angel wing seals 38 are configured to limit ingestion of the hot gases flowing through the hot gas path 42 into wheel spaces 44.

In the exemplary embodiment, angel wing seals 38 include an angel wing body 46 and an angled upturn portion 48 at a distal end thereof and one or more curved root blends 50. Angel wing seals 38 include a lower seal body surface 52 and an upper seal body surface 54. In the exemplary embodiment, lower seal body surface 52 and upper seal body surface 54 are substantially parallel to engine centerline C.

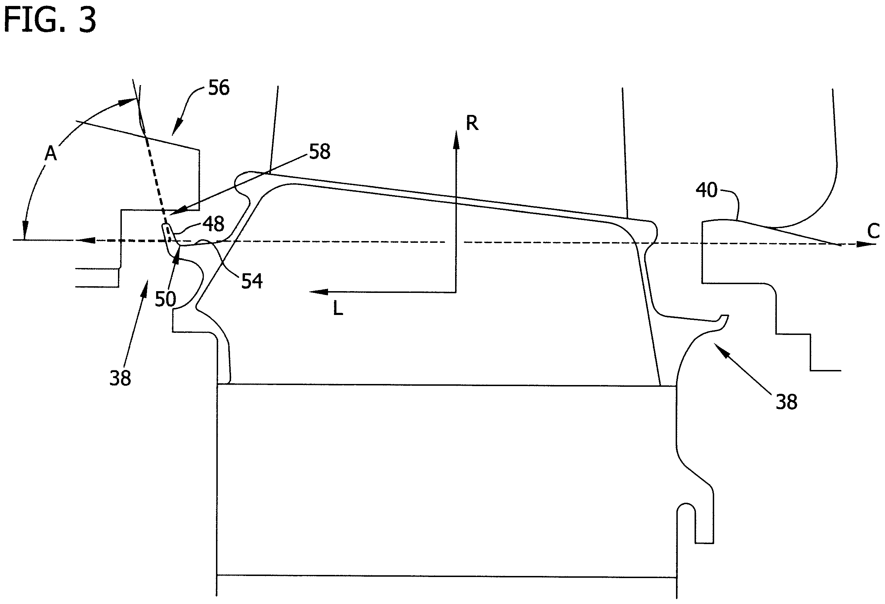

Fig. 3 illustrates a cross-section of a portion of rotor blade 22. In the exemplary embodiment, angled upturn portion 48 is disposed at an angle A with respect to engine centerline C. Angle A is an angle between about 0 degrees and 90 degrees, more particularly between about 60 degrees and 70 degrees. In one example, angle A is about 65 degrees. In the exemplary embodiment, at least a portion of angel wing seal 38 overlaps a portion of stationary part 56 and thereby forms a seal with stationary part 56 of turbine 10. The interaction of angel wing seal 38 with stationary part 56, which forms the seal, substantially limits hot gasses from flow path 42 from passing through the seal.

In the exemplary embodiment, a gap 58 having an axial component and a radial component is formed between stationary part 56 and angel wing seal 38. The axial direction is indicated generally as direction L and the radial direction is indicated generally as direction R. Decreasing the size of gap 58 may increase the effectiveness of the seal. However, the size of gap 58 may fluctuate based upon a temperature of the components in turbine 10. For example, when all of the components are cold (i.e., during engine startup conditions), gap 58 may be a first size. After all of the components have warmed up (i.e., in a steady state operating condition), gap 58 may be a second size that is smaller than the first size. Angle A and the length of angled upturn portion 48 may be sized and configured to minimize the size of gap 58 during steady state conditions.

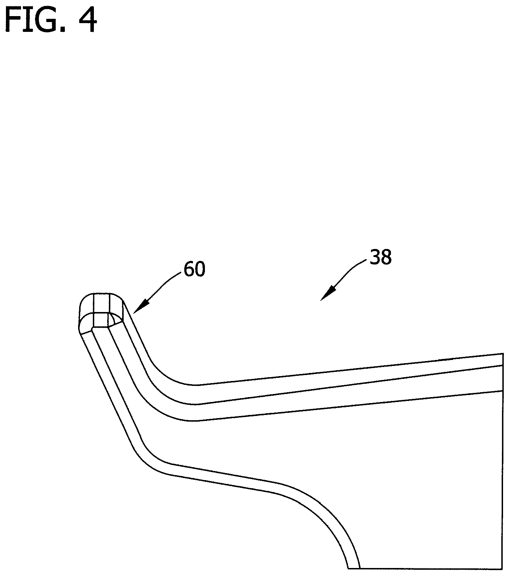

Fig. 4 shows a perspective view of an embodiment of angel wing seal 38. In the method in accordance with the invention, angel wing seal 38 is formed, for example by casting, with a tuning portion 60. Tuning portion 60 facilitates tuning of gap 58 by providing extra material which can be removed to change the size of gap 58. As used herein, "tuning" refers to changing and/or optimizing the size of gap 58. For example, during start-up and shut-down conditions of turbine 10, the temperatures of the components are constantly changing, which creates a transient condition (i.e., a continuously changing size of gap 58). However, such transient conditions are not known until testing of turbine 10. If during testing it is determined that gap 58 is too small, in at least one of the axial and radial directions, a portion of tuning portion 60 will be removed, for example by machining, to increase the size of gap 58. Thus, because the angled upturn portion is angled from between 0 degrees and 90 degrees, it is possible to tune the radial and axial components of gap 58 without having to redesign, or recast, angel wing seal 38. In some embodiments, tuning portion 60 is between approximately 0.5 mm to 13 mm in length.

Angel wing seal 38 is formed by casting. In accordance with the invention, a casting mold is formed of angel wing 38 for casting. In this embodiment, angle A may be set to maximize throughput of the casting process. In another embodiment, angle A may be set to provide a predetermined throughput (i.e., a number of castings per specified time period) of the casting process. In one embodiment, angel wing seal 38 is made of a nickel superalloy material. In another embodiment, angel wing seal 38 is integrally cast with one or more other components of turbine 10.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A method of producing a seal between a stationary component and a rotating component of a turbine engine (10), comprising:
forming a mold for casting the seal, said mold comprising:
a seal body portion (38) for forming a base of a turbine engine blade (22, 24);
a wing portion (46) for forming an angel wing extending axially from said seal body (38), said angel wing comprising a first portion (52, 54) substantially parallel with a centerline of the engine (10) and an angled upturn portion (48), said first portion (52, 54) extending between the seal body (38) and said angled upturn portion (48);
a tip portion extending from the wing portion, said tip portion for forming a tunable tip portion extending from said angled upturn portion, said tip portion comprising space for a portion of material of said tunable tip portion to be cast therein;
wherein an angle defined between the engine centerline and the angled upturn portion (48) is between about 0 degrees and about 90 degrees;
casting said seal using said mold;
determining that a size of a gap formed by the seal is too small in at least one of an axial direction and a radial direction; and
tuning the size of the gap by removing an amount of the portion of material from said tunable tip portion such that the size of the gap is increased in at least one of the radial direction and the axial direction.

2. The method according to claim 1, further comprising filling said mold with a nickel superalloy material.

3. The method according to claim 1 or 2, wherein the mold comprises an arcuate segment extending between said angled upturn portion (48) and said first portion (52, 54).

4. The method according to claim 1, 2 or 3, wherein said seal body (38) forms a shank (28) of the blade in the turbine engine (10).

5. The method according to any of claims 1 to 4, wherein said angled upturn portion (48) is configured to seal against the stationary component (56) of the gas turbine engine (10).

6. The method according to any preceding claim, wherein said angled upturn portion is configured to overlap at least the portion of the stationary component (56) in the gas turbine engine (10).

7. The method according to any preceding Claim, wherein the angled upturn portion (48) is disposed at an angle of between about 60 degrees to 70 degrees to the engine centre line.

## Patentansprüche

1. Verfahren zur Herstellung einer Dichtung zwischen einem feststehenden Bauteil und einem rotierenden Bauteil eines Turbinenmotors (10), umfassend:
Bilden einer Form zum Gießen der Dichtung, wobei die Form Folgendes umfasst:
einen Dichtungskörperabschnitt (38) zum Bilden einer Basis einer Turbinenmotorschaufel (22, 24);
einen Flügelabschnitt (46) zur Bildung eines Winkelflügels, der sich axial von dem Dichtungskörper (38) erstreckt, wobei der Winkelflügel einen ersten Abschnitt (52, 54) im Wesentlichen parallel zu einer Mittellinie des Motors (10) und einem abgewinkelten aufsteigenden Abschnitt (48) umfasst, wobei sich der erste Abschnitt (52, 54) zwischen dem Dichtungskörper (38) und dem abgewinkelten aufsteigenden Abschnitt (48) erstreckt;
einen Spitzenabschnitt, der sich von dem Flügelabschnitt erstreckt, wobei der Spitzenabschnitt zum Bilden eines einstellbaren Spitzenabschnitts dient, der sich von dem abgewinkelten aufsteigenden Abschnitt erstreckt, wobei der Spitzenabschnitt Raum umfasst, in den ein Materialabschnitt des einstellbaren Spitzenabschnitts eingegossen werden soll;
wobei ein Winkel, der zwischen der Motormittellinie und dem abgewinkelten aufsteigenden Abschnitt (48) definiert ist, zwischen etwa 0 Grad und etwa 90 Grad liegt;
Gießen der Dichtung unter Verwendung der Form;
Bestimmen, dass eine Größe eines durch die Dichtung gebildeten Spalts in mindestens einer von einer axialen Richtung und einer radialen Richtung zu klein ist; und
Einstellen der Größe des Spalts durch Entfernen einer Menge des Materialabschnitts von dem einstellbaren Spitzenabschnitt derart, dass die Größe des Spalts in mindestens einer der radialen Richtung oder der axialen Richtung erhöht wird.

2. Verfahren nach Anspruch 1, ferner umfassend Füllen der Form mit einem Nickel-Superlegierungsmaterial.

3. Verfahren nach Anspruch 1 oder 2, wobei die Form ein bogenförmiges Segment umfasst, das sich zwischen dem abgewinkelten aufsteigenden Abschnitt (48) und dem ersten Abschnitt (52, 54) erstreckt.

4. Verfahren nach Anspruch 1, 2 oder 3, wobei der Dichtungskörper (38) einen Schaft (28) der Schaufel im Turbinenmotor (10) bildet.

5. Verfahren nach einem der Ansprüche 1 bis 4, wobei der abgewinkelte aufsteigende Abschnitt (48) konfiguriert ist, gegen das feststehende Bauteil (56) des Gasturbinenmotors (10) abzudichten.

6. Verfahren nach einem der vorstehenden Ansprüche, wobei der abgewinkelte aufsteigende Abschnitt konfiguriert ist, mindestens den Abschnitt des feststehenden Bauteils (56) im Gasturbinenmotor (10) zu überlappen.

7. Verfahren nach einem der vorstehenden Ansprüche, wobei der abgewinkelte aufsteigende Abschnitt (48) in einem Winkel von etwa 60 Grad bis 70 Grad zur Motormittellinie angeordnet ist.

## Revendications

1. Procédé de production d'un joint entre un composant stationnaire et un composant rotatif d'un moteur à turbine (10), comprenant :
une formation d'un moule pour couler le joint, ledit moule comprenant :
une partie de corps de joint (38) pour former une base d'une pale de moteur à turbine (22, 24) ;
une partie d'aile (46) pour former une aile d'ange s'étendant axialement depuis ledit corps de joint (38), ladite aile d'ange comprenant une première partie (52, 54) sensiblement parallèle à une ligne centrale du moteur (10) et une partie inclinée de retournement (48), ladite première partie (52, 54) s'étendant entre le corps de joint (38) et ladite partie inclinée de retournement (48) ;
une partie de pointe s'étendant à partir de la partie d'aile, ladite partie de pointe destinée à former une partie de pointe réglable s'étendant depuis ladite partie inclinée de retournement, ladite partie de pointe comprenant de l'espace pour une partie du matériau de ladite partie de pointe réglable destiné à être coulé dans celle-ci ;
dans lequel un angle défini entre la ligne centrale de moteur et la partie inclinée de retournement (48) est entre environ 0 degré et environ 90 degrés ;
un coulage dudit joint en utilisant ledit moule ;
une détermination du fait qu'une taille d'un espacement formé par le joint est trop faible dans au moins une d'une direction axiale et d'une direction radiale ; et
un réglage de la taille de l'espacement en éliminant une quantité de la partie de matériau de ladite partie de pointe réglable de telle sorte que la taille de l'espacement soit augmentée dans au moins l'une de la direction radiale et de la direction axiale.

2. Procédé selon la revendication 1, comprenant en outre un remplissage dudit moule avec un matériau de superalliage de nickel.

3. Procédé selon la revendication 1 ou 2, dans lequel le moule comprend un segment arqué s'étendant entre ladite partie inclinée de retournement (48) et ladite première partie (52, 54).

4. Procédé selon la revendication 1, 2 ou 3, dans lequel ledit corps de joint (38) forme une tige (28) de la pale dans le moteur à turbine (10).

5. Procédé selon l'une quelconque des revendications 1 à 4, dans lequel ladite partie inclinée de retournement (48) est configurée pour se sceller contre le composant stationnaire (56) du moteur à turbine à gaz (10).

6. Procédé selon l'une quelconque des revendications précédentes, dans lequel ladite partie inclinée de retournement est configurée pour chevaucher au moins la partie du composant stationnaire (56) dans le moteur à turbine à gaz (10).

7. Procédé selon l'une quelconque des revendications précédentes, dans lequel la partie inclinée de retournement (48) est disposée à un angle entre environ 60 degrés et 70 degrés par rapport à la ligne centrale du moteur.
